# EUROPÄISCHE PATENTSCHRIFT

(11) **EP 2 861 896 B1**
(45) Veröffentlichungstag und Bekanntmachung des Hinweises auf die Patenterteilung: **28.03.2018**
(21) Anmeldenummer: 13729695.0
(22) Anmeldetag: 13.06.2013
(51) Int. Cl.: F16J 15/16, F16H 57/04

(54) **ÖLSTAURING**
OIL BLOCKAGE RING
ANNEAU DE BOUCHON D'HUILE

(30) Priorität: 15.06.2012 EP 12172105
(43) Veröffentlichungstag der Anmeldung: 22.04.2015
(73) Patentinhaber: Siemens Aktiengesellschaft, 80333 München (DE)
(72) Erfinder: FISCHER, Rocco, 09456 Annaberg-Buchholz (DE); STEUBLER, Thomas, 09385 Lugau /Erzgeb. (DE)
(86) Internationale Anmeldenummer: PCT/EP2013/062239
(87) Internationale Veröffentlichungsnummer: WO 2013/186301

(56) Entgegenhaltungen:
- EP-A2- 0 879 977
- WO-A1-2011/059052
- GB-A- 2 093 538
- US-A- 5 879 085
- US-A1- 2008 011 115

## Beschreibung

Die vorliegende Erfindung betrifft einen Ölstauring und ein Verfahren zu seiner Herstellung.

Ein Einstellen eines definierten Ölstandes in einem Wellenlager kann mittels eines Ölstaublechs erfolgen.

EP 2574826 A1 (GKN Driveline Köping) 03.04.2013 beschreibt in Fig. 3 einen als Einpressbuchse ausgebildeten Ölstauring 12, welcher durch Bildung eines Ölsumpfes im Bereich eines Drehlagers 11 sicherstellt, dass diesem Lager 11 auch im Falle eines unterbrochenen Ölflusses ausreichend Öl zu dessen Schmierung zur Verfügung steht.

DE 10036975 A1 (Jatco Transtechnology Ltd.) 12.04.2001 beschreibt in Fig. 1 ein Ölreservoir 16, welches durch eine als Öldamm wirkende Laufbahn 15 angestaut wird. In das Öl des Ölreservoirs 16 tauchen Kegellagerrollen 3 zumindest teilweise ein.

Ferner ist aus der Druckschrift US 5,879,085 A ein Ölstauring gemäss dem Oberbegriff von Patentanspruch 1 bekannt.

Zum Einstellen eines vorgegebenen Ölstands in einer Lagerbohrung, bei abgesenktem Ölstand im Getriebeinneren, an einer mittels Labyrinth abgedichteten, aus einem Stirnradgetriebe herausgeführten Welle werden heute u. a. auch Ölstauringe verwendet. Ölstauringe sind beispielsweise in Flender-Stirnradgetrieben FZG der Bauart H1SH, Baugrößen 3 bis 19, eingebaut, die im Katalog Siemens MD 20.1 "Zahnradgetriebe, Größen 3-22", Stand 2009, beschrieben sind. Der Ölstauring sitzt komplett in einer Lagerbohrung des Getriebes. Der Grundkörper der Ölstauringe wird vorgegossen. Zum Einstellen des Ölstandes werden am Umfang des Ringes Bohrungen mechanisch eingebracht. Das über die radialen Bohrungen abfließende Öl muss über gefräste Nuten und eigens dafür vorgesehene Bohrungen im Gehäuse abgeleitet werden.

Aufgabe der vorliegenden Erfindung ist es, ein Verfahren zur Herstellung eines verbesserten Ölstaurings, einen verbesserten Ölstauring sowie ein Rohteil zur Herstellung eines solchen Ölstaurings anzugeben.

Die Aufgabe wird erfindungsgemäß durch ein Verfahren mit den in Anspruch 10 angegebenen Merkmalen gelöst. Das erfindungsgemäße Verfahren zum Herstellen eines Ölstaurings umfasst folgende Schritte: Urformen eines Rohteils, welches eine als Ölablauf vorgesehene Nut mit einer in der Nut ausgebildeten Ölstaukante aufweist; spanendes Bearbeiten des Rohteils an mindestens einer Umfangsfläche und/oder mindestens einer Planfläche zur Ausbildung eines Fertigteils mit vorgegebenen Durchmessern bzw. Planflächen; und Belassen der als Ölablauf vorgesehenen Nut in dem durch Urformen erhaltenen Zustand an dem Fertigteil.

Die Aufgabe wird erfindungsgemäß ebenfalls durch einen Ölstauring mit den in Anspruch 1 angegebenen Merkmalen gelöst.

Ein Belassen einer Nut in dem durch Urformen erhaltenen Zustand resultiert in einer Oberfläche der Nut, welche der Kategorie S1 der BNIF-Richtreihe Nr. 359-01 zuzuordnen ist.

Unter Umfangsfläche wird eine gebogene Fläche verstanden, welche insbesondere radial um die Ringachse verläuft. Unter Planfläche wird eine ebene Fläche verstanden, welche insbesondere senkrecht zu der Ringachse verläuft.

Der erfindungsgemäße Ölstauring dient der Einstellung eines definierten Ölstands in einem Lager, d. h. er hat eine Ölstaufunktion. Der Ölstauring sitzt in einer Lagerbohrung des Gehäuses, staut das Öl in der Lagerbohrung auf einen vorgegebenen Ölstand an und leitet dosiert frisches Öl zu und überschüssiges Öl wieder ab. Das über waagrechte Nuten aus dem Ölstauring abfließende Öl wird über Bohrungen und Nuten im Getriebegehäuse abgeleitet. Außerdem kann der Ölstauring, durch seine Mantelflächen, welche auch als Umfangsflächen bezeichnet werden, einer Zentrierung eines Lagerdeckels, und damit auch einer Aufnahmebuchse und eines äußeren Labyrinthringes, über der Lagerbohrung dienen. Darüber hinaus kann der Ölstauring eine axiale Positionierung des Lagers und eine Ableitung von axialen Lagerkräften auf den Lagerdeckel übernehmen, und zwar durch mindestens eine seiner Planflächen.

Der Erfindung basiert auf der Erkenntnis, dass die Ölstauringe zwei Funktionen erfüllen, welche absolut unterschiedliche geometrische Genauigkeiten benötigen. Zum einen positionieren die Ölstauringe angrenzende Bauteile exakt zueinander, und das in sehr engen Toleranzen von wenigen hundertstel Millimetern. Zum anderen leiten die Ölstauringe über Nuten gezielt Öl zu und ab.

Die entsprechenden Elemente der Ölstauringe, welche die jeweilige Funktion erfüllen, benötigen absolut unterschiedliche geometrische Genauigkeiten. Während die der Ölführung dienenden Elemente, d.h. die Nuten, lediglich vorhanden sein müssen und die Positionierungsfunktion nicht beeinträchtigen dürfen, müssen die der Positionierungsfunktion dienenden Elemente hochgenau sein. Die geringe notwendige Genauigkeit der Ölführungselemente kann durch ein Urformverfahren, vorzugsweise "Sandformguss", in jedem Fall eingehalten werden; die hohen geforderten Genauigkeiten der Positionierungsfunktionen, z.B. bezüglich der Rundheit der Umfangsflächen und der Lage der Planflächen zueinander, nicht.

An den erfindungsgemäßen Ölstauringen wird jedes Element genau mit der Genauigkeit, und dem der Genauigkeit entsprechenden Fertigungsverfahren, hergestellt, die für ihre Funktion notwendig ist. Erfindungsgemäß werden "überqualifizierte" Verfahren zur Herstellung von Ölführungselementen vermieden, da sie das fertige Produkt unnötig teuer machen:
- Die Nuten zur Ölführung, bereits beim Urformen mit geringer aber ausreichender Genauigkeit erzeugt, sind "quasi geschenkt", weil das einmal vorhandene Gussmodell sie automatisch beim Gießvorgang erzeugt. Das Urformen, vorzugsweise durch Sandformguss, ist das günstigstmögliche Verfahren, um das Rohteil UND die Ölführungselemente mit ausreichender Genauigkeit herzustellen.
- Für die zur Positionierung erforderlichen Elemente des Ölstaurings (Stirn- und Mantelflächen) ist die Urformen erzielbare Genauigkeit viel zu gering. Sie werden deshalb spanend nachbearbeitet. Bevorzugt ist hierbei das Fertigungsverfahren Drehen. Es gibt noch weit feinere spanende Bearbeitungsverfahren, mit denen man die betreffenden Oberflächen herstellen könnte. Diese wären jedoch wiederum "überqualifiziert", weil sie deutlich höhere Genauigkeiten erreichen können als gefordert, aber auch teurer sind als nötig. Drehen ist das günstigstmögliche Fertigungsverfahren zur Herstellung der benötigten Genauigkeit der Positionierungselemente des Ölstaurings.

Erfindungsgemäß werden unnötig genaue und damit teure Fertigungsverfahren durch ausreichend genaue und damit preisgünstigere Varianten ersetzt. Die dem Ölablauf dienenden Nuten, welche bisher "teuere" Bohrungen waren, erhält man erfindungsgemäß sogar "geschenkt", weil sie beim Gießen automatisch mit erzeugt werden, ohne dass man hierzu einen weiteren Herstellungsschritt vorsehen muss. Sandformguss und Drehen erzeugen grundsätzlich andere Oberflächenbeschaffenheiten bzw. -strukturen.

Durch ein Herstellen von funktionsrelevanten Komponenten bzw. Eigenschaften des Ölstaurings - außer Durchmessern und Planflächen - bereits beim Urformen können Arbeitsschritte bei der nachfolgenden, spanenden Bearbeitung des Ölstaurings entfallen. Das Einstellen des Ölstandes wird durch einen abgesetzten Ölstauring gewährleistet, der aus einem Gussrohteil hergestellt wird, in dem alle zur Ölführung benötigten Nuten bereits vorgegossen sind. Der geringere Fertigungsaufwand bei der mechanischen Bearbeitung, auch an angrenzenden Bauteilen, führt zu kürzeren Durchlauf- und Wiederbeschaffungszeiten, einem geringeren Fehlerpotential und geringeren Fertigungskosten, auch für angrenzende Bauteile wie z.B. Gehäuse. Somit ist durch die vorliegende Erfindung eine deutlich Einsparung von Arbeitszeit und Material erzielbar.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung wird der unbearbeitete Zustand durch ein Gießen eines metallischen Rohteils des Ölstaurings erzeugt. Gemäß einer bevorzugten Ausgestaltung der Erfindung erfolgt das Urformen durch Gießen einer Schmelze in eine Gießform. Vorzugsweise erfolgt das Urformen durch Sandformguss. Urformen des Ölstauring-Rohteils durch Gießen bietet den Vorteil, dass nach Bereitstellen einer Gießform eine große Anzahl identischer Werkstücke schnell und kostengünstig hergestellt werden können.

Gemäß einer bevorzugten Ausgestaltung der Erfindung umfasst der Ölstauring mindestens zwei Nuten, deren Oberflächen der Kategorie S1 der BNIF-Richtreihe Nr. 359-01 zuzuordnen sind. Dabei umfassen die mindestens zwei Nuten eine oder mehrere folgender Nuten: Nut für einen Ölzulauf bei Druckschmierung, Nut für einen Ölzulauf bei druckloser Schmierung, Nut für einen Notüberlauf. Dies bietet den Vorteil, dass das Einstellen des Ölstandes in einer den Ölstauring aufnehmenden Lagerbohrung durch einen Ölstauring gewährleistet wird, der aus einem Gussrohteil hergestellt wird, in dem zur Ölführung benötigte Nuten bereits vorgegossen sind.

Gemäß einer bevorzugten Ausgestaltung der Erfindung umfasst der Ölstauring mindestens zwei Nuten, deren Oberflächen der Kategorie S1 der BNIF-Richtreihe Nr. 359-01 zuzuordnen sind und die symmetrisch zu einer Symmetrieebene des Rings angeordnet sind. Es ist möglich, dass zwei der mindestens zwei symmetrischen Nuten jeweils eine in der Nut ausgebildete Ölstaukante aufweisen und entlang einer quer zu der Ringachse verlaufenden Geraden verlaufen. Dadurch kann der Ölablauf quer zu der Achse der den Ölstauring mittig durchdringenden Wellendurchführung erfolgen. Durch diese neue Ölführung sind bisher notwendige Bohr- und Fräsarbeiten am Gehäuse hinfällig.

Die eine oder mehreren Nuten für einen Ölablauf verlaufen vorzugsweise waagrecht und weisen eine Ölstaukante auf.

Gemäß einer bevorzugten Ausgestaltung der Erfindung umfasst der Ölstauring ein oder mehr Nuten, deren Oberflächen der Kategorie S1 der BNIF-Richtreihe Nr. 359-01 zuzuordnen sind und die so ausgebildet sind, dass ein Zu- und/oder Ablauf von Öl ausschließlich über einen Lagerdeckel eines Gehäuses erfolgen kann, welcher den Ölstauring zum Gehäuseaußenraum hin abdeckt, wenn sich der Ölstauring in einer in einem Gehäuse montierten Position befindet. Dadurch kann erreicht werden, dass das dem Ölstauring zufließende wie auch das vom Ölstauring abfließende Öl ausschließlich über den Lagerdeckel geführt wird. Durch diese neue Ölführung sind bisher notwendige Bohr- und Fräsarbeiten am Gehäuse hinfällig.

Gemäß einer bevorzugten Ausgestaltung der Erfindung umfasst die mindestens eine zur Ölführung vorgesehene Nut zwei oder mehr Nuten, die symmetrisch zu einer Symmetrieebene angeordnet sind. Durch eine symmetrische Anordnung von Nuten können mit demselben Ölstauring verschiedene Getriebeausführungen realisiert werden.

Gemäß einer bevorzugten Ausgestaltung der Erfindung sind eine oder mehrere Nuten der mindestens einen Nut eine Nut für einen Ölzulauf bei druckloser Schmierung und/oder eine Nut mit Ölstaukante für einen Ölablauf, wobei diese ein oder mehrere Nuten, parallel zu einer Achse einer in dem Ölstauring ausgebildeten Wellendurchführung gesehen, mit korrespondierenden Nuten für den Ölzu- bzw. Ölablauf eines Lagerdeckels des Gehäuses überlappen, welcher den Ölstauring zum Gehäuseaußenraum hin abdeckt, wenn sich der Ölstauring in einer in einem Gehäuse montierten Position befindet. Auf diese Weise wird die Synergie zwischen dem Ölstauring und dem angrenzenden Lagerdeckel genutzt.

Das spanende Bearbeiten kann durch Drehen und/oder Fräsen erfolgen. Diese Spanverfahren erlauben eine schnelle und genaue Bearbeitung der Rohteile.

Gemäß einer bevorzugten Ausgestaltung der Erfindung ist der Ölstauring einteilig.

Eine bevorzugte Weiterbildung der Erfindung ist ein Maschinenelement, insbesondere ein Getriebe, mit einem Gehäuse, einer eine Wand des Gehäuses durchdringenden, in Lagern gelagerten Welle, welche mit einer berührungslosen Wellenabdichtung gegen die Gehäusewand abgedichtet ist, und einem Ölstauring wie oben beschrieben, wobei der Ölstauring in einer Lagerbohrung des Maschinenelements angeordnet ist und in seiner Lage und Orientierung relativ zu der Gehäusewand unveränderlich ist.

Bei dem Maschinenelement ist es möglich, dass der Ölstauring von rotierenden Teilen des Maschinenelements beanstandet angeordnet ist. Weiter ist es bei dem Maschinenelement möglich, dass der Ölstauring eine Nut für einen Ölzulauf bei druckloser Schmierung und/oder eine Nut mit Ölstaukante für einen Ölablauf umfasst, wobei diese ein oder mehrere Nuten, parallel zu der Ringachse (6) gesehen, mit korrespondierenden Nuten für den Ölzu- bzw. Ölablauf eines Lagerdeckels des Gehäuses überlappen, welcher den Ölstauring zum Gehäuseaußenraum hin abdeckt.

Die Aufgabe wird erfindungsgemäß außerdem durch ein Rohteil zum Herstellen eines Ölstaurings gelöst, wobei das Rohteil durch Urformen, vorzugsweise Gießen, ausgebildet ist und mindestens eine zur Ölführung vorgesehene Nut aufweist, welche durch das besagte Urformen ausgebildet ist. Das Rohteil dient als ein Ausgangsprodukt, aus welchem durch einen Materialabtrag, mittels einer spanenden Bearbeitung, an mindestens einer Umfangsfläche und/oder mindestens einer Planfläche ein Ölstauring gefertigt werden kann. Vorzugsweise werden bei der Bearbeitung des Rohteils die bereits im Rohteil ausgebildeten Ölführungsnuten nicht bearbeitet, sondern sie bleiben in einem unbearbeiteten Zustand, wie er sich durch das Urformen ergibt.

Im Folgenden wird die Erfindung anhand mehrerer Ausführungsbeispiele unter Zuhilfenahme der beiliegenden Zeichnung erläutert. Es zeigen jeweils schematisch und nicht maßstabsgetreu
- Fig. 1 und 2: die bei einer Anordnung in einer Lagerbohrung dem Gehäuseinneren zugewandte Seite eines fertigen Ölstaurings (Fig. 2) und dieselbe Seite eines entsprechenden Rohteils (Fig. 1), jeweils in Schrägansicht;
- Fig. 3 und 4: die bei einer Anordnung in einer Lagerbohrung dem Lagerdeckel zugewandte Seite des in Fig. 2 dargestellten fertigen Ölstaurings (Fig. 4) und dieselbe Seite des entsprechenden Rohteils (Fig. 3), jeweils in Schrägansicht;
- Fig. 5: eine Frontalansicht der bei einer Anordnung in einer Lagerbohrung dem Gehäuseinneren zugewandten Seite des in den Fig. 2 und 4 dargestellten Ölstaurings;
- Fig. 6 und 7: zwei Schnitte VI, VII des in Fig. 5 gezeigten Ölstaurings;
- Fig. 8: eine Ansicht eines Ölstaurings in einer Einbauposition in einem Gehäuse mit abgenommenem Lagerdeckel; und
- Fig. 9: einen Schnitt IX des in Fig. 8 gezeigten Gehäuses.

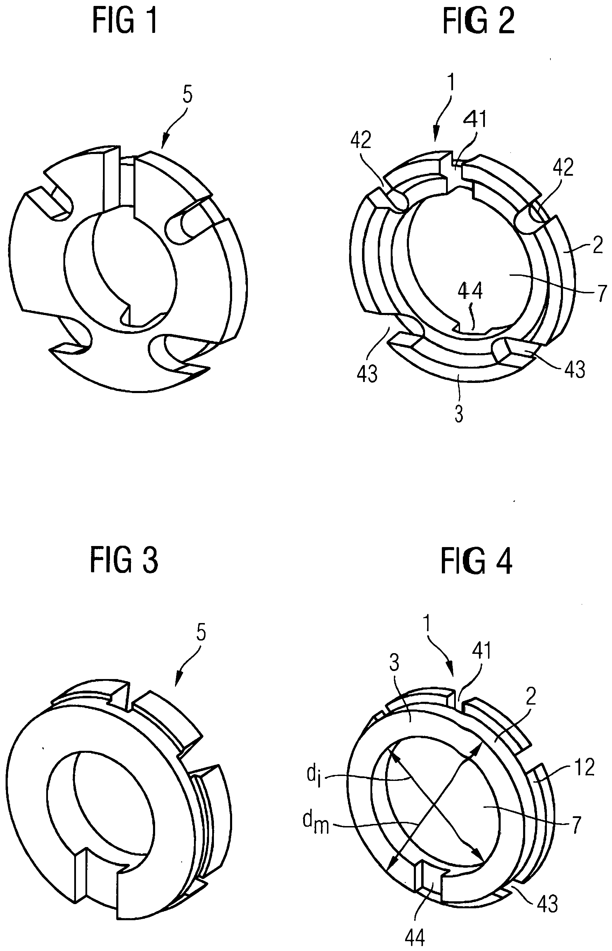

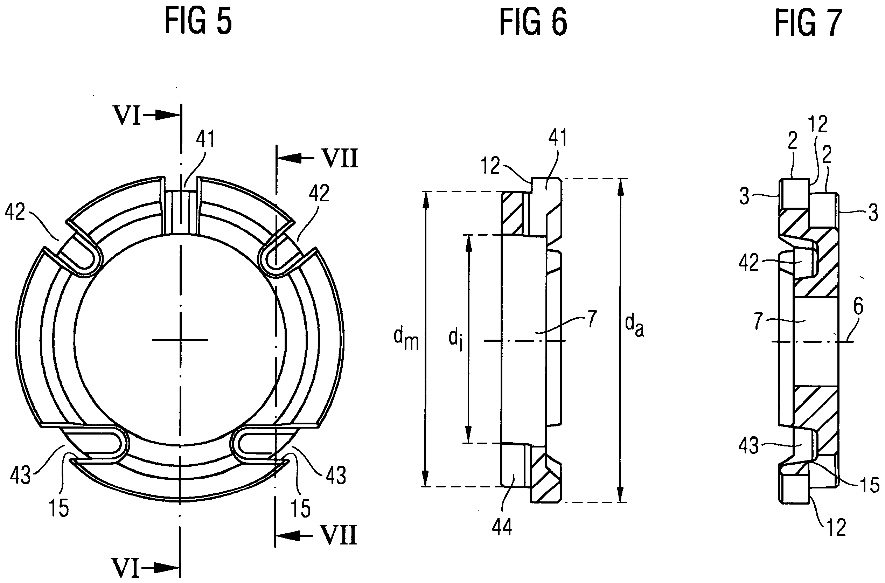

Der in den Fig. 1 bis 7 dargestellte Ölstauring 1 ist zur Anordnung in einer Lagerbohrung eines mit einem flüssigen Schmierstoff wie Öl geschmierten Lagers vorgesehen. Der Ölstauring 1 ist z. B. zum Einsatz in einem Getriebe, einem Motor oder einer Maschine geeignet, die ein mit Öl geschmiertes Wellenlager aufweisen.

Der Ölstauring 1 weist Umfangsflächen 2 und Planflächen 3, 12 auf, welche durch eine spanende Bearbeitung ausgebildet sind. Eine erste Planfläche 3 auf der einem Lagerdeckel zugewandten Seite bildet einen konzentrisch um eine Rotationsachse 6 des Ölstaurings 1 verlaufenden, geschlitzten Ring mit einem inneren Ringdurchmesser dᵢ und einem äußeren Ringdurchmesser dₘ. Dabei entspricht der innere Ringdurchmesser dᵢ dem Durchmesser der kreisförmigen Ringöffnung 7 des Ölstaurings 1. Die Ringöffnung 7 dient der Durchführung einer Welle. Damit zwischen dem Ölstauring 1 und einer den Ölstauring 1 durchdringenden Welle ein ringförmiger Luftspalt ausgebildet wird, ist der innere Ringdurchmesser dᵢ geringfügig größer als ein Außendurchmesser der Welle. Der Ölstauring 1 wird mit seinem Außendurchmesser dₐ in eine Lagerbohrung des Getriebegehäuses eingesetzt, während der Ölstauring 1 mit dem äußeren Ringdurchmesser dₘ in einen Lagerdeckel des Getriebegehäuses eingesetzt wird.

Eine zweite Planfläche 12 auf der einem Lagerdeckel zugewandten Seite, die zwischen dem äußeren Ringdurchmesser dₘ und dem Außendurchmesser dₐ des Ölstaurings 1 ausgebildet ist, überträgt Lagerkräfte auf den Lagerdeckel. Durch eine die erste und zweite Planfläche 3, 12 verbindende Umfangsfläche 2 wird eine Zentrierung des Ölstaurings 1 beim Einsetzen in eine Getriebegehäuse erleichtert.

Der Ölstauring kann durch seine Umfangsflächen 2 eine Zentrierung eines Lagerdeckels, und damit auch einer Aufnahmebuchse und eines äußeren Labyrinthringes, über der Lagerbohrung bewirken. Darüber hinaus kann der Ölstauring durch die zweite, dem Lagerdeckel zugewandte Planfläche 12 und die Planfläche 3 auf der dem Getriebeinneren zugewandten Seite eine axiale Positionierung des Lagers und eine Ableitung von axialen Lagerkräften auf den Lagerdeckel übernehmen.

Der Ölstauring 1 weist außerdem zur Ölführung vorgesehenen Nuten 41, 42, 43, 44 auf, welche in einem unbearbeiteten Zustand belassen sind, der durch ein Urformen des Rohbauteils 5 des Ölstaurings erzeugt wurde.

Der Ölstauring 1 weist eine Nut 41 für einen Ölzulauf bei Druckschmierung, zwei Nuten 42 für einen Ölzulauf bei druckloser Schmierung, zwei Nuten 43 für einen Ölablauf und eine Nut 44 für einen Notüberlauf auf. Die doppelt vorhandenen Nuten 42, 43 sind symmetrisch angeordnet, um verschiedene Getriebeausführungen realisieren zu können. Dies ermöglicht die Herstellung verschiedener Fertigteile aus demselben Rohteil.

Die Position der Ölstaukanten 15 der waagrechten Nuten 43 wird so gewählt, dass ein Ölstauring 1 für zwei oder mehr erforderliche Ölstände, ggf. bedingt durch verschiedene Wellenlager, verwendet werden kann. Dies verringert die Teilevielfalt und somit auch die Lagerhaltungskosten.

Das in Fig. 1 und 3 dargestellte Rohteil 5 weist eine durch Gießen erzeugte Oberfläche auf, welche also der Kategorie S1 der BNIF-Richtreihe Nr. 359-01 zuzuordnen ist. In dem Rohteil 5 sind die Oberflächen an den Umfangsflächen 2 und die Planflächen 3 und 12, die in dem Fig. 2 und 4 gezeigten Fertigteil 1 angegeben sind, mit Übermaß ausgeformt, da sie noch durch nachfolgende spanende Bearbeitungsschritte auf das Endmaß nachbearbeitet werden. Das Rohteil 5 weist bereits die Nuten 41, 42, 43 und 44 auf, die in dem Fig. 2 und 4 gezeigten Fertigteil 1 angegeben sind. In den spanenden Bearbeitungsschritten, welche an dem Rohteil 5 ausgeführt werden und welche zu dem in den Fig. 2 und 4 gezeigten Fertigteil führen, werden lediglich die Umfangsflächen 2 und die Planflächen 3 und 12 aus dem Rohteil 5 herausgearbeitet, die Nuten 41, 42, 43 und 44 aber in dem durch Gießen erzeugten Rohzustand, d.h. unbearbeitet belassen.

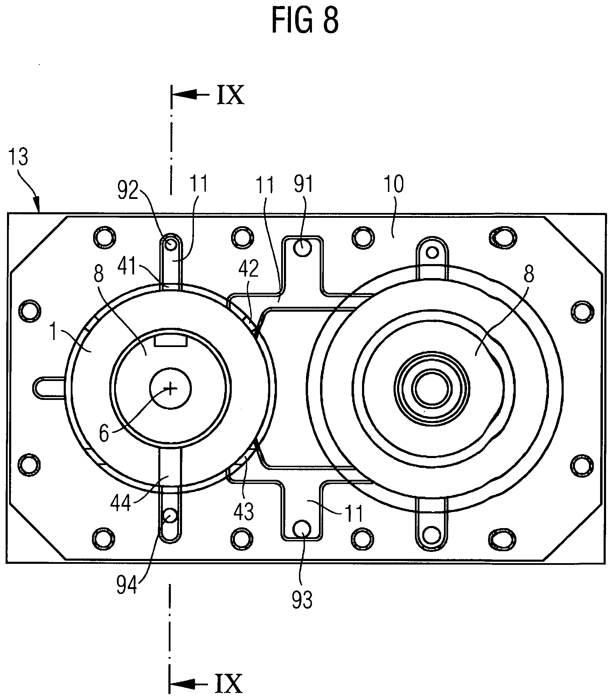

Fig. 8 zeigt eine Ansicht eines Ölstaurings 1 in einer Einbauposition in einer Wand 13 eines Getriebegehäuses. Um das Zusammenwirken von Ölstauring 1 und Ölzu- und -abführung darzustellen, sind der Ansicht des Ölstaurings 1 die Konturen eines Lagerdeckels 10 überlagert, welcher bei einer Montage an der Gehäusewand 13 den Ölstauring 1 abdeckt. Durch die Wellendurchführung des Ölstaurings 1 ist eine Welle 8 geführt, die mittels einer Labyrinthdichtung gegenüber der Getriebeumgebung abgedichtet ist. Der die Welle 8 umgebende Ölstauring 1 sitzt in einer Lagerbohrung, die in einer Wand 13 des Getriebegehäuses angebracht ist. Die Gehäusewand 13 weist eine Bohrung 91 auf, durch welche Öl bei druckloser Schmierung aus dem Inneren des Getriebegehäuses in eine Zufluss-Nut 11 geleitet wird, die auf einer Innenseite des Lagerdeckels 10 eingegossen ist. Von dort fließt das Öl unter dem Einfluss der Schwerkraft zu einer Nut 42 des Ölstaurings 1, welche für eine drucklose Schmierung vorgesehen ist, und fließt von dort über diese Nut 42 zur Lagerbohrung, wo es der Schmierung des Wellenlagers dient.

Überschüssiges Öl in der Lagerbohrung fließt über den Ölüberlauf 43 aus der Lagerbohrung in eine Abfluss-Nut 11, welche auf einer Innenseite des Lagerdeckels 10 eingegossen ist. Von dort wird das Öl durch die Nut 11 zu einer weiteren Bohrung 93 in der Gehäusewand 13 geleitet, durch welche das Öl zurück in das Inneren des Getriebegehäuses fließt. Von dort gelangt das Öl über eine Tauchschmierung rotierender verzahnter Teile zu einem Ölauffangbehälter, von wo das Öl in die Zufluss-Nut 11 gelangt. Auf diese Weise sind ein geschlossener Ölkreislauf und eine verlässliche Schmierung der Wellenlager gewährleistet.

Die Gehäusewand weist eine weitere Bohrung 92 auf, über die bei Druckschmierung Öl über eine Nut 11 zu der Nut 41 für Druckschmierung des Ölstaurings 1 gelangen kann. Außerdem ist unterhalb der Nut 44 für den Notüberlauf des Ölstaurings 1 eine Ablaufbohrung 94 in der Gehäusewand vorgesehen.

Die Nuten 41 bis 44 in dem Ölstauring 1 überlappen, parallel zu einer Achse einer in dem Ölstauring 1 ausgebildeten Wellendurchführung gesehen, mit den korrespondierenden Nuten 11 für den Ölzu- bzw. Ölablauf des Lagerdeckels 10 des Gehäuses, welcher den Ölstauring 1 zum Gehäuseaußenraum hin abdeckt. Dabei fällt die Wellenachse 6 mit der Ringachse des Ölstaurings 1 zusammen.

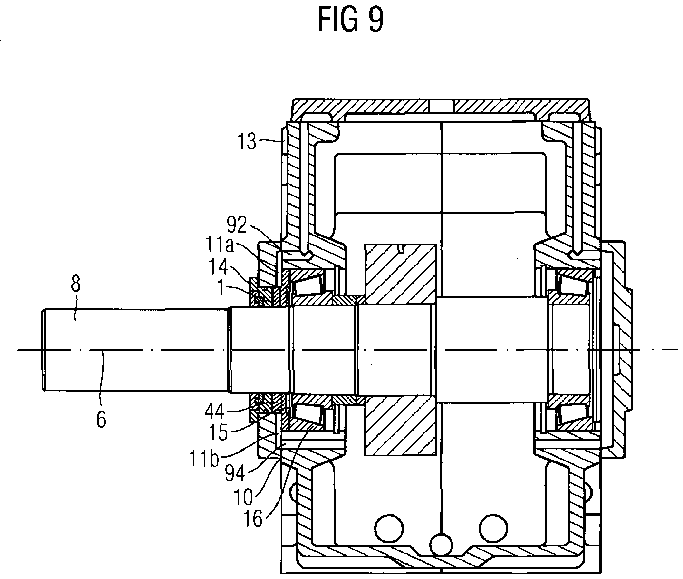

Fig. 9 zeigt einen Schnitt IX entlang der Ringachse 6 eines Ölstaurings 1, der in einer Lagerbohrung eines Getriebegehäuses 13 sitzt und von einem Lagerdeckel 10 bedeckt ist. Eine durch eine Gehäusewand 13 geführte Welle 8 ist durch eine Labyrinthdichtung abgedichtet, die in eine in dem Lagerdeckel 10 fixierten Aufnahmebuchse 14 eingelegt ist.

Das Getriebegehäuse 13 weist Bohrungen 92, 94 auf zur Zufuhr und Abfuhr von Öl zu einem Wellenlager 16, in dem eine Welle 1 gelagert ist. Das aus dem Gehäuseinneren über eine Bohrung 92 zum Ölzulauf für Druckschmierung zugeführte Öl fließt in einer in dem Lagerdeckel 10 ausgebildeten Nut 11a für Druckschmierung zu der Lagerbohrung. Dort wird das Schmieröl durch den Ölstauring 1 bis zu einer Ölstaukante 15 aufgestaut.

In dem Schnitt ist ebenfalls eine Nut 44 des Ölstaurings 1 für einen Notüberlauf zu erkennen, aus der das Öl über eine im Lagerdeckel 10 ausgebildete Nut 11b für einen Notüberlauf zu einer Bohrung 94 im Getriebegehäuse fließt. Über diese Bohrung 94 gelangt das Öl wieder zurück in das Gehäuseinnere. Die Bohrung 94 hat eine weitere Funktion: bei normaler Tauchschmierung dient sie einem Druckausgleich und/oder einer Ölumwälzung, wenn das Lager Öl in Richtung Lagerdeckel fördert. Tauchschmierung bedeutet, dass der Ölstand im Getriebegehäuse so hoch ist, dass wenigstens ein Lager, vorzugsweise alle Lager, und wenigstens ein verzahntes Teil, vorzugsweise alle verzahnten Teile, in Öl eintauchen und Wellenumfangsflächen mit Kontakt zu Wellendichtringen vom stehenden Öl berührt werden.

## Patentansprüche

1. Ölstauring (1), umfassend
- mindestens eine Umfangsfläche (2) und/oder Planfläche (3, 12), und
- eine als Ölablauf vorgesehene Nut (43), welche eine in der Nut (43) ausgebildete Ölstaukante (15) aufweist, **dadurch gekennzeichnet, dass** die Umfangsfläche (2) und/oder Planfläche (3, 12) eine Oberflächengüte Rₐ ≤ 3,2 aufweist, und dass der Ölstauring (1) mindestens zwei Nuten (41, 42, 43, 44) umfasst, wobei die mindestens zwei Nuten (41, 42, 43, 44) eine oder mehrere folgender Nuten umfasst: Nut (41) für einen Ölzulauf bei Druckschmierung, Nut (42) für einen Ölzulauf bei druckloser Schmierung, Nut (44) für einen Notüberlauf.

2. Ölstauring (1) nach Anspruch 1, umfassend mindestens zwei Nuten (41, 42, 43, 44), die symmetrisch zu einer Symmetrieebene des Rings (1) angeordnet sind.

3. Ölstauring (1) nach Anspruch 2, wobei zwei der mindestens zwei symmetrischen Nuten (41, 42, 43, 44) jeweils eine in der Nut (43) ausgebildete Ölstaukante (15) aufweisen und entlang einer quer zu der Ringachse (6) verlaufenden Geraden verlaufen.

4. Ölstauring (1) nach einem der Ansprüche 1 bis 3, umfassend ein oder mehr Nuten (41, 42, 43, 44), die so ausgebildet sind, dass ein Zu- und/oder Ablauf von Öl ausschließlich über einen Lagerdeckel (10) eines Gehäuses erfolgen kann, welcher den Ölstauring zum Gehäuseaußenraum hin abdeckt, wenn sich der Ölstauring in einer in einem Gehäuse montierten Position befindet.

5. Ölstauring (1) nach einem der Ansprüche 1 bis 4, wobei der Ölstauring (1) einteilig ist.

6. Maschinenelement, insbesondere Getriebe, mit einem Gehäuse (13), einer eine Wand des Gehäuses (13) durchdringenden, in Lagern gelagerten Welle (8), welche mit einer berührungslosen Wellenabdichtung (14) gegen die Gehäusewand (13) abgedichtet ist, und einem Ölstauring (1) nach einem der Ansprüche 1 bis 5, wobei der Ölstauring in einer Lagerbohrung des Maschinenelements angeordnet ist und in seiner Lage und Orientierung relativ zu der Gehäusewand (13) unveränderlich ist.

7. Maschinenelement nach Anspruch 6, wobei der Ölstauring (1) von rotierenden Teilen (8) des Maschinenelements beanstandet angeordnet ist.

8. Maschinenelement nach einem der Ansprüche 6 oder 7, wobei der Ölstauring (1) eine Nut (42) für einen Ölzulauf bei druckloser Schmierung und/oder eine Nut (43) mit Ölstaukante (15) für einen Ölablauf umfasst, wobei diese ein oder mehrere Nuten (42, 43), parallel zu der Ringachse (6) gesehen, mit korrespondierenden Nuten (11) für den Ölzu- bzw. Ölablauf eines Lagerdeckels (10) des Gehäuses überlappen, welcher den Ölstauring (1) zum Gehäuseaußenraum hin abdeckt.

9. Rohteil (5) zum Herstellen eines Ölstaurings (1) nach einem der Ansprüche 1 bis 5, wobei das Rohteil (5) durch Urformen, vorzugsweise Gießen, ausgebildet ist und mindestens eine zur Ölführung vorgesehene Nut (41, 42, 43, 44) aufweist, welche durch das besagte Urformen ausgebildet ist.

10. Verfahren zum Herstellen eines Ölstaurings (1) nach einem der Ansprüche 1 bis 5, umfassend die Schritte:
- Urformen eines Rohteils (5), welches eine als Ölablauf List Paragraph, Bulleted Level: 1 + Aligned at: 0.63 cm + Indent at: 1.27 cm (43) vorgesehen Nut (43) mit einer in der Nut (43) ausgebildeten Ölstaukante (15) aufweist:
- spanendes Bearbeiten des Rohteils (5) an mindestens einer Umfangsfläche (2) und/oder mindestens einer Planfläche (3, 12) zur Ausbildung eines Fertigteils (1) mit vorgegebenen Durchmessern (di, dm, da) bzw. Planflächen (3, 12; und
- Belassen der als Ölablauf vorgesehenen Nut (43) in dem durch Urformen erhaltenen Zustand an dem Fertigteil (1).

## Claims

1. Oil retaining ring (1), comprising
- at least one circumferential surface (2) and/or plane surface (3, 12) and
- a groove (43) intended as an oil runout which has an oil retaining edge (15) embodied in the groove (43), **characterised in that** the circumferential surface (2) and/or plane surface (3, 12) has a surface quality Rₐ ≤ 3.2, and that the oil retaining ring (1) comprises at least two grooves (41, 42, 43, 44), wherein the at least two grooves (41, 42, 43, 44) include one or more of the following grooves: groove (41) for an oil inflow with pressurised lubrication, groove (42) for an oil inflow with unpressurised lubrication, groove (44) for an emergency overflow.

2. Oil retaining ring (1) according to claim 1, comprising at least two grooves (41, 42, 43, 44) which are arranged symmetrically to a plane of symmetry of the ring (1).

3. Oil retaining ring (1) according to claim 2, wherein two of the at least two symmetrical grooves (41, 42, 43, 44) each have an oil retaining edge (15) embodied in the groove (43) and run in a straight line transverse to the axis of the ring (6) .

4. Oil retaining ring (1) according to one of claims 1 to 3, comprising one or more grooves (41, 42, 43, 44) which are embodied so that an inflow and/or runout of oil can occur exclusively via a bearing cover (10) of a housing, which covers the oil retaining ring in the direction towards the outer area of the housing when the oil retaining ring is located in a position installed in a housing.

5. Oil retaining ring (1) according to one of claims 1 to 4, wherein the oil retaining ring (1) is in one piece.

6. Machine element, especially a gearbox with a housing (13), a shaft (8) passing through a wall of the housing (13) supported in bearings which is sealed with a non-contact shaft seal (14) against the housing wall (13) and an oil retaining ring (1) according to one of claims 1 to 5, wherein the oil retaining ring is arranged in a bearing bore of the machine element and is invariable in its position and orientation relative to the housing wall (13).

7. Machine element according to claim 6, wherein the oil retaining ring (1) is arranged at a distance from rotating parts (8) of the machine element.

8. Machine element according to one of claims 6 or 7, wherein the oil retaining ring (1) includes a groove (42) inflow for non-pressurized lubrication and/or a groove (43) with an oil retaining edge (15) for an oil runout, wherein these one or more grooves (42, 43), viewed in parallel to the ring axis (6), overlap with corresponding grooves (11) for the oil inflow or runout of a bearing cover (10) of the housing which covers the oil retaining ring (1) in relation to the outer area of the housing.

9. Blank (5) for producing an oil retaining ring (1) according to one of claims 1 to 5, wherein the blank (5) is embodied by primary forming, preferably casting and has at least one groove (41, 42, 43, 44) intended for oil guidance, which is embodied by the said primary forming.

10. Method for manufacturing an oil retaining ring (1) according to one of claims 1 to 5, comprising the steps:
- Primary forming of a blank (5) having a groove (43) intended as an oil runout (43) with an oil retaining edge (15) embodied in the groove (43);
- Machining of the blank (5) on at least one circumferential surface (2) and/or at least one plane surface (3, 12) for embodying a finished part (1) with predetermined diameters (dᵢ, dₘ, dₐ) or plane surfaces (3, 12); and
- Leaving the groove (43) intended as the oil runout in the state obtained by primary forming on the finished part (1).

## Revendications

1. Anneau (1) de bouchon d'huile, comprenant
- au moins une surface (2) périphérique et/ou une surface (3, 12) plane et
- une rainure (43) prévue comme évacuation d'huile, qui a un bord (15) de bouchon d'huile constitué dans la rainure (43), **caractérisé en ce que** la surface (2) périphérique et/ou la surface (3, 12) plane a une qualité de surface Rₐ ≤ 3,2 et **en ce que** l'anneau (1) de bouchon d'huile comprend au moins deux rainures (41, 42, 43, 44), les au moins deux rainures (41, 42, 43, 44) comprenant une ou plusieurs rainures suivantes : rainure (41) pour une arrivée d'huile pour un graissage forcé, rainure (42) pour une arrivée d'huile pour un graissage non forcé, rainure (44) pour un trop plein d'urgence.

2. Anneau (1) de bouchon d'huile suivant la revendication 1, comprenant au moins deux rainures (41, 42, 43, 44), qui sont disposées symétriquement par rapport à un plan de symétrie de l'anneau (1).

3. Anneau (1) de bouchon d'huile suivant la revendication 2, dans lequel deux des au moins deux rainures (41, 42, 43, 44) symétriques ont chacune un bord (15) de bouchage d'huile, constitué dans la rainure (43) et s'étendent suivant une droite s'étendant transversalement à l'axe (6) de l'anneau.

4. Anneau (1) de bouchon d'huile suivant l'une des revendications 1 à 3, comprenant une ou plusieurs rainures (41, 42, 43, 44) constituées de manière à pouvoir effectuer une entrée et/ou une sortie d'huile exclusivement par un couvercle (10) de palier d'une enveloppe, qui recouvre l'anneau de bouchon d'huile, en direction de l'espace extérieur à l'enveloppe, lorsque l'anneau de bouchon d'huile se trouve dans une position montée dans une enveloppe.

5. Anneau (1) de bouchon d'huile suivant l'une des revendications 1 à 4, dans lequel l'anneau (1) de bouchon d'huile est d'une seule pièce.

6. Elément de machine, notamment transmission, comprenant une enveloppe (13), un arbre (8) traversant une paroi de l'enveloppe (13), monté dans des paliers et rendu étanche vis-à-vis de la paroi (13) de l'enveloppe par une étanchéité (14) d'arbre sans contact et un anneau (1) de bouchon d'huile suivant l'une des revendications 1 à 5, l'anneau de bouchon d'huile étant disposé dans un alésage de palier de l'élément de machine et étant immuable en position et en orientation par rapport à la paroi (13) de l'enveloppe.

7. Elément de machine suivant la revendication (6), dans lequel l'anneau (1) de bouchon d'huile est disposé à distance de parties (8) tournantes de l'élément de machine.

8. Elément de machine suivant l'une des revendications 6 ou 7, dans lequel l'anneau (1) de bouchon d'huile comprend une rainure (42) pour une arrivée d'huile pour un graissage forcé, et/ou une rainure (43) ayant un bord (15) de bouchon d'huile pour une sortie d'huile, cette une ou ces plusieurs rainures (42, 43), considéré parallèlement à l'axe (6) de l'anneau, se chevauchant avec des rainures (11) correspondantes d'arrivée ou de sortie d'huile d'un couvercle (10) de palier de l'enveloppe, qui recouvre l'anneau (1) de bouchon d'huile vers l'espace extérieur à l'enveloppe.

9. Partie (5) tubulaire pour fabriquer un anneau (1) de bouchon d'huile suivant l'une des revendications 1 à 5, la partie (5) tubulaire étant constituée par transformation primaire, de préférence par coulée, et ayant au moins une rainure (41, 42, 43, 44) prévue pour conduire de l'huile, rainure qui est constituée par ladite transformation primaire.

10. Procédé de fabrication d'un anneau (1) de bouchon d'huile suivant l'une des revendications 1 à 5, comprenant les stades :
- formation primaire d'une partie (5) tubulaire, qui a une rainure (43) prévue comme évacuation (43) d'huile, ayant un bord (15) de bouchon d'huile constitué dans la rainure (43),
- usinage avec enlèvement de copeaux de la partie (5) tubulaire sur au moins une surface (2) périphérique et/ou au moins une surface (3, 12) plane pour constituer une pièce (1) finie ayant des diamètres (di, dm, da) ou des surfaces (3, 12) planes données à l'avance et
- on laisse sur la pièce (1) finie la rainure (43), prévue comme évacuation d'huile, dans l'état obtenu par transformation primaire.
